# EUROPÄISCHE PATENTSCHRIFT

(11) **EP 2 070 847 B1**
(45) Veröffentlichungstag und Bekanntmachung des Hinweises auf die Patenterteilung: **27.07.2011**
(21) Anmeldenummer: 07123171.6
(22) Anmeldetag: 13.12.2007
(51) Int. Cl.: B65G 47/76, B65G 47/82, B65G 47/84

(54) **Weiche für Förderer**
Diverter for conveyors
Aiguillage pour transporteur

(43) Veröffentlichungstag der Anmeldung: 17.06.2009
(73) Patentinhaber: ETA SA Manufacture Horlogère Suisse, 2540 Grenchen (CH)
(72) Erfinder: Senn, Jean-Philippe, 2525 Le Landeron (CH); Durand, Friedrich, 4500 Solothurn (CH); Bär, Manfred, 78147 Vöhrenbach (DE)
(74) Vertreter: Couillard, Yann Luc Raymond

(56) Entgegenhaltungen:
- EP-A- 0 659 665
- EP-A- 1 468 944
- DE-A1- 3 916 424

## Beschreibung

Die vorliegende Erfindung betrifft eine Weiche, welche dazu bestimmt ist, oberhalb eines Förderers, beispielsweise eines Förderbandes einer Fertigungslinie, angebracht zu werden, und dazu dient, Werkstückträger, die auf dem Förderer in eine Förderrichtung transportiert werden, wahlweise in eine andere Richtung umzulenken oder ohne Richtungsänderung durchzulassen.

Derartige Weichen kommen insbesondere in Fertigungslinien zum Einsatz, bei denen ein zu bearbeitendes Werkstück auf einem Transportband von einer Bearbeitungsstation zur nächsten transportiert wird, und an jeder Bearbeitungsstation ein Fertigungsschritt durchgeführt wird. Mit Hilfe einer Weiche der eingangs genannten Art kann das Werkstück, bzw. ein Werkstückträger mit einem darauf liegenden Werkstück, von dem Transportband zu einer Bearbeitungsstation ausgeschleust werden. Insbesondere bei modularen Fertigungslinien müssen diese Weichen elektronisch ansteuerbar sein, um einen Werkstückträger je nach Bedarf in Richtung einer Fertigungsstation auszuschleusen oder auf dem Transportband weiter zu transportieren. Bisher werden zum Ausschleusen von einzelnen Werkstückträgern häufig einfache Schieber verwendet. Bei komplizierten Anordnungen, vor allem, wenn ein mehrspurig betriebenes Transportband verwendet wird, ist dies jedoch nicht zufrieden stellend, da sowohl für Spurwechsel als auch zum Ausschleusen und zur Rückgabe eines Werkstückträgers von einer Fertigungseinheit an das Transportband jeweils separate Schieber benötigt werden. Die Ansteuerung einer Vielzahl separater Schieber ist jedoch Vergleichweise kompliziert. Jeder Schieber muss, nachdem er einem Werkstückträger verschoben hat, wieder an seine Ausgangsposition zurückgefahren werden, und ist somit nicht sofort wieder einsatzbereit. Um dennoch eine hohe Fertigungsrate zu erzielen, müssen die Schieber mit hohen Geschwindigkeiten bewegt werden. Um zu vermeiden, dass mehrere Schieber sich gegenseitig behindern, werden diese bei herkömmlichen Fertigungslinien nebeneinander angeordnet, so dass für eine Ausschleusungs- und Spurwechsel- Weiche, die mit Schiebern realisiert wird, viel Platz benötigt wird.

Das Dokument DE3916424 zeigt allerdings eine Weiche, die oberhalb eines Förderers angebracht werden kann. Diese Weiche besitzt eine Überschubkette, entlang derer Förderplatten umlaufen, die aus einer Ruhestellung klappenartig von einer Seite aus in eine aktive Arbeitstellung verschwenkt werden. Die dargestellte Weiche weist jedoch keine zwei parallelen Leisten auf, und kann sinnvoll nur in eine Laufrichtung betrieben werden, so dass die Einsatzmöglichkeiten geschränkt sind.

Der vorliegenden Erfindung liegt daher die Aufgabe zugrunde, eine Weiche zu schaffen, die die geschilderten Nachteile überwindet, und auch in komplexen Fertigungslinien mit zufrieden stellenden Ergebnissen eingesetzt werden kann.

Diese Aufgabe wird erfindungsgemäss durch eine Weiche gemäss Anspruch 1 gelöst.

Die erfindungsgemässe Weiche ist dazu bestimmt, oberhalb eines Förderers angebracht zu werden, auf welchem Werkstückträger in eine Förderrichtung transportiert werden. Bei dem Förderer kann es sich beispielsweise um ein ein- oder mehrspurig betriebenes Transportband handeln. Die Weiche umfasst wenigstens ein Ausschleuselement, welches entlang einer geschlossenen Bahn beweglich ist, wobei diese geschlossene Bahn symmetrisch um eine Achse verläuft, die sich parallel zu der Förderrichtung erstreckt. Zudem ist das Ausschleuselement zwischen einer neutralen Position und einer in Bezug auf die Achse der Bahn aussenseitig von der neutralen Position liegenden aktiven Position verstellbar. Wenn das Ausschleuselement sich in seiner neutralen Position befindet, kann ein Werkstückträger, der unter der Weiche auf dem Förderer transportiert wird, unabhängig von der Bewegung des Ausschleuselementes auf der Bahn ungehindert seinen Weg fortsetzen. Wenn das Ausschleuselement sich jedoch in seiner aktiven Position aussenseitig von der neutralen Position befindet, dann existiert ein Abschnitt der Bahn, auf dem es näher an dem Förderer liegt. Bei geschickter Wahl der Geometrie der Bahn und des Abstandes des Ausschleuselementes von dem Förderer verschiebt das Ausschleuselement einen auf dem Förderer liegenden Werkstückträger in Richtung seiner Bewegung entlang der Bahn.

Gemäss einer besonders bevorzugten Ausführungsform der Erfindung sind mehrere Ausschleuselemente vorgesehen, die jeweils unabhängig voneinander verstellbar sind. Dadurch kann die Effizienz der Weiche erhöht werden.

Vorzugsweise sind die Ausschleuselemente derart miteinander gekoppelt, dass sie nur gemeinsam entlang der Bahn beweglich sind. Beispielsweise können mehrere Ausschleuselemente an einem entlang der geschlossenen Bahn umlaufenden, mit einem Antrieb verbundenen Band befestigt sein, wobei ein Antreiben des Bandes eine Bewegung der Ausschleuselemente entlang der Bahn bewirkt. Vorzugsweise kann der Antrieb sowohl vorwärts als auch rückwärts angetrieben werden. Ein solcher Antrieb kann sowohl Bestandteil der Weiche sein, als auch an anderer Stelle bereitgestellt werden.

Wenn ein Band verwendet wird, an dem mehrere Ausschleuselemente mit gleichmässigen Abständen voneinander befestigt sind, dann sollte der Abstand dabei geringfügig grösser als die Breite der zu befördernden Werkstücke oder Werkstückträger gewählt werden, so dass direkt nacheinander auf dem Transportband beförderte Werkstücke oder Werkstückträger von zwei benachbarten Ausschleuselementen in einer Bewegung nacheinander ausgeschleust werden können.

Gemäss einer bevorzugten Ausführungsform der Erfindung ist das Ausschleuselement bzw. sind die Ausschleuselemente entlang der Bahn in zwei einander entgegen gesetzte Richtungen beweglich. Damit kann ein-und dasselbe Ausschleuselement je nach Bewegungsrichtung sowohl ein Werkstück von einem Transportband weg ausschleusen, als auch umgekehrt von einer Fertigungseinheit zurück auf ein Transportband verschieben.

Gemäss einer besonders vorteilhaften Ausführungsform der Erfindung weist die Weiche auch eine mit einer Steuerung gekoppelte Betätigungseinheit zum Verstellen der Ausschleuselemente von der neutralen Position in die aktive Position auf.
Die Betätigungseinheit kann beispielsweise einen Magneten oder ein pneumatisches Element umfassen.

Vorzugsweise verfügt die erfindungsgemässe Weiche über einen mit einer Steuerung gekoppelten Sensor, welcher feststellt, ob das Ausschleuselement sich in der neutralen oder in der aktiven Position befindet. Mit Hilfe des Sensors kann festgestellt werden, ob ein von einer Steuerung an ein Betätigungselement gegebener Befehl auch erfolgreich ausgeführt worden ist. Falls dem nicht so sein sollte, beispielsweise aufgrund eines Defekts, so wird dies dank des Sensors sofort bemerkt. In einem solchen Fall kann eine Steuerung der Weiche dann veranlassen, dass eine Fehlermeldung ausgegeben wird, oder kann sogar an eine Zentraleinheit einen Befehl zum Anhalten der Fertigungslinie senden, um Folgeschäden zu vermeiden.

Das Ausschleuselement ist gemäss einer aufgrund ihrer Einfachheit bevorzugten Ausführungsform als horizontales, sich parallel zu der Achse der Bahn erstreckendes Leistenpaar ausgebildet, wobei die beiden Leisten des Paares in der neutralen Position aneinander anliegen und in der aktiven Position voneinander beabstandet sind. Wenn die Ausschleuselemente von einem Band auf der geschlossenen Bahn geführt werden, dann kann jeweils eine erste Leiste an dem Band befestigt sein, während die zweite Leiste des Paares beweglich an der ersten Leiste befestigt ist.

Die erfindungsgemässe Weiche kann beispielsweise in einer Fertigungslinie mit einem Transportband und mehreren Fertigungseinheiten verwendet werden, bei der jede Fertigungseinheit ein Funktionselement und Förderbänder oder andere Mittel zum Befördern von Werkstückträgern von dem Transportband zu dem Funktionselement und umgekehrt umfasst.

Mit Hilfe eines Ausschleuselementes kann ein Werkstückträger von dem Transportband auf ein Förderband geschoben werden, auf dem er dann zu dem Funktionselement befördert wird. Nach erfolgter Bearbeitung durch das Funktionselement kann der Werkstückträger von dem zweiten Förderband zurück in Richtung des Transportbandes befördert werden, um anschliessend von einem sich nun in die Gegenrichtung Richtung bewegenden Ausschleuselement der Weiche wieder auf das Transportband geschoben zu werden. Die Werkstückträger werden dabei vorzugsweise nicht gestoppt, sondern die Weiche wird so gesteuert, dass diese aus der Bewegung auf dem Transportband heraus in Richtung des Funktionselementes der Fertigungseinheit umgelenkt werden. Dadurch werden die bei einem abrupten Stoppen der Werkstückträger auftretenden hohen Beschleunigungen vermieden, und der Ausschleusungsvorgang von dem Transportband zu der Fertigungseinheit nimmt nur sehr wenig Zeit in Anspruch. Die Weiche kann dabei schon "anfahren", bevor der Werkstückträger vollständig unter der Weiche liegt, so dass er gleichzeitig weiter in die Transportrichtung befördert und von der Weiche umgelenkt wird. In diesem Fall ergibt sich dann eine kurvenförmige Bahn des Werkstückträgers von dem Transportband in Richtung der Fertigungseinheit.

Um ruckartige Bewegungen und hohe Beschleunigungen der Werkstückträger und damit der darauf befindlichen Werkstücke zu vermeiden, kann die Weiche so angesteuert werden, dass sich eine in etwa sinusförmige Geschwindigkeitskurve der Ausschleuselemente ergibt. Der Werkstückträger wird also nach und nach bis auf eine Maximalgeschwindigkeit beschleunigt, und vor der Übergabe an ein Förderband bzw. das Transportband wieder abgebremst. Auf diese Weise wird die Zeit, die zum Verschieben des Werkstückträgers benötigt wird, minimiert, ohne dass das auf dem Werkstückträger befindliche Werkstück den bei den hohen Beschleunigungen und ruckartigen Bewegungen auftretenden Kräften ausgesetzt würde.

Bei einem zwei- oder mehrspurig betriebenen Transportband kann die erfindungsgemässe Weiche auch dazu verwendet werden, die Werkstückträger von einer Spur auf die andere zu verschieben. Wenn die Fertigungseinheiten alle auf einer Seite des Transportbandes angeordnet sind, fungiert eine der beiden Spuren gewissermassen als Abbiegespur, während die den Fertigungseinheiten abgewandte Spur als Überholspur dient.

Eines der Ausschleuselemente kann beispielsweise einen auf der von der Fertigungseinheit abgewandten Spur ("Überholspur") des Transportbandes liegenden Werkstückträger auf die der Fertigungseinheit zugewandte Spur ("Abbiegespur") des Transportbandes verschieben. Anschliessend kann dieser Werkstückträger dann von dem gleichen Ausschleuselement auf ein Förderband geschoben werden, welches ihn zu dem Funktionselement bringt. Alternativ kann der von der Überholspur auf die Abbiegespur verschobene Werkstückträger auch auf der Abbiegespur weiter transportiert werden. Hierfür muss das Ausschleuselement nach dem Verschieben des Werkstückträgers auf die Abbiegespur in seine neutrale Position verstellt werden. Das Transportband kann je nach Art der konkreten Anwendung auch mit mehr als zwei Spuren betrieben werden.

Wenn das umlaufende Band der Weiche in die andere Richtung angetrieben wird, kann ein Werkstückträger, der nicht zu der nächsten Fertigungseinheit hin ausgeschleust werden soll, von der der Fertigungseinheit zugewandten Spur ("Abbiegespur") des Transportbandes auf die der Fertigungseinheit abgewandte Spur ("Überholspur") verschoben werden. Es können auch zwei nebeneinander angeordnete Weichen verwendet werden, die in einander entgegen gesetzte Richtungen angetrieben sind. Der Antrieb kann dabei mit einem Motor realisiert werdne, der beiden Weichen gemeinsam ist.

Im Folgenden soll die Erfindung anhand eines bevorzugten Ausführungsbeispiels und unter Bezugnahme auf die beigefügten Zeichnungen näher beschrieben werden.

Dabei zeigen die Zeichnungen im Einzelnen:
Fig. 1 : eine perspektivische Ansicht einer an einer Fertigungslinie montierten Weiche,
Fig. 2: die Weiche aus Fig. 1 in einer anderen Position,
Fig. 3 : einen vergrösserten Ausschnitt aus Fig. 1.

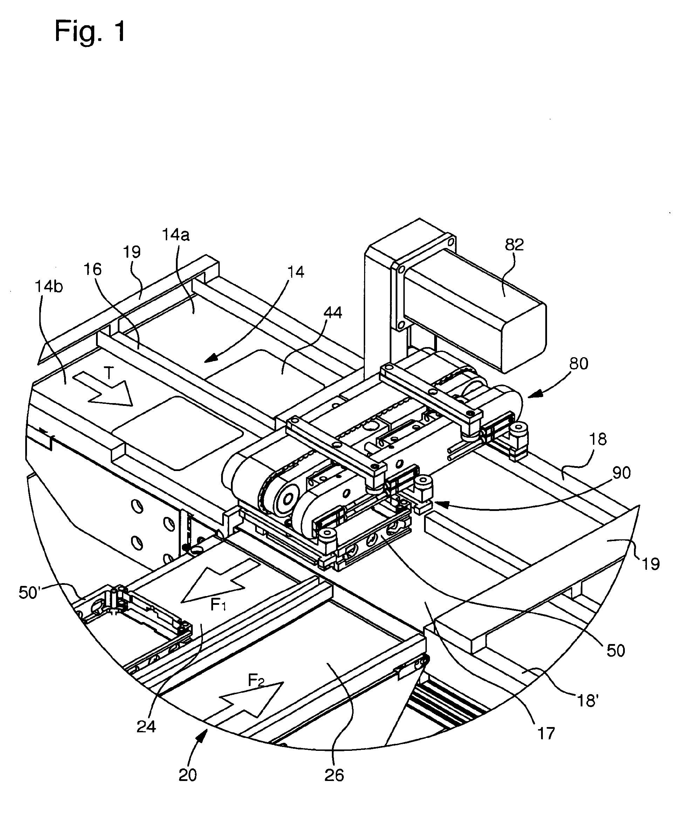

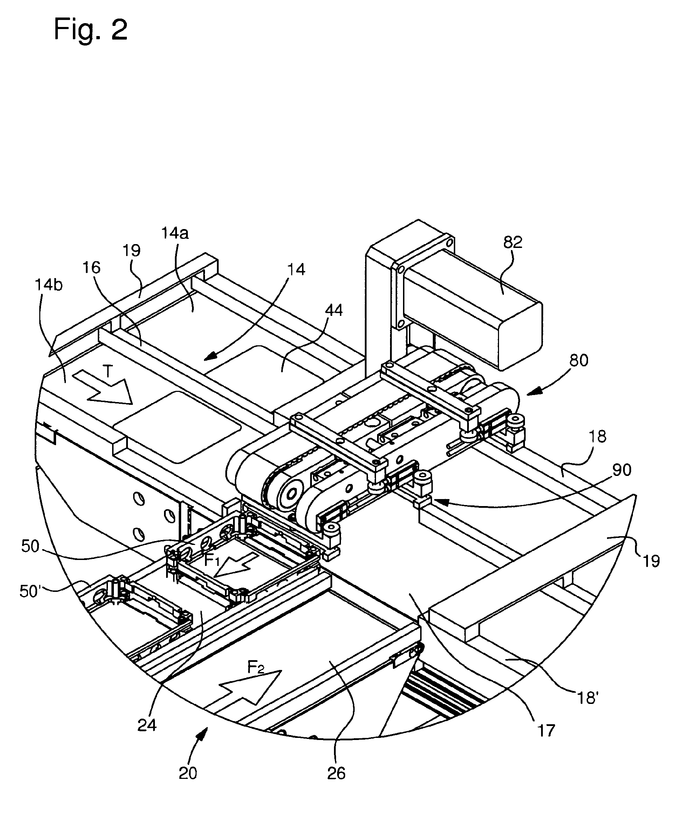

Fig. 1 und Fig. 2 zeigen beide eine Weiche 80, die zu einer Fertigungseinheit 20 gehört und oberhalb eines endlos umlaufenden Transportbandes 14 angebracht ist. Das Transportband 14 ist in bekannter Weise an zwei Umlenkpunkten jeweils über eine drehbar gelagerte Umlenkwalze geführt. Zum Antreiben einer dieser Umlenkwalzen ist ein Motor vorgesehen, der in den Figuren nicht erkennbar ist, und der das Transportband 14 mit konstanter Geschwindigkeit in eine Transportrichtung T antreibt.

In den Figuren sind beispielhaft jeweils mehrere Werkstückträger 50 dargestellt, die im Wesentlichen die Form von Tellern mit einem eine rechteckige Grundfläche umgebenden Rahmen besitzen. Selbstverständlich können auch beliebige andere Werkstückträger verwendet werden, und es ist auch denkbar, zu bearbeitende Werkstücke ohne einen solchen Träger direkt auf dem Transportband 14 zu transportieren. Die Weiche 80 muss in jedem Fall an die Dimensionen der verwendeten Werkstückträger angepasst sein.

Wie man in den Fig. 1 und 2 erkennt, wird das Transportband 14 zweispurig betrieben. Jede der beiden Spuren 14a, 14b ist gerade breit genug für einen Werkstückträger 50. An den Aussenseiten des Transportbandes 14 dienen sich in Transportrichtung T erstreckende Begrenzungsstege 18, 18' als Führung für die Werkstückträger 50. Die beiden Spuren 14a, 14b sind von Trennstegen 16 getrennt, die parallel zu den seitlichen Begrenzungsstegen 18, 18' verlaufen und von Brücken 19 gehalten werden. An der in den Figuren dem Betrachter zugewandten Seite des Transportbandes 14 ist auf der Höhe der Weiche 80 ein Andockbereich 17 vorgesehen, in dem der Begrenzungssteg 18' ausgeschnitten ist. Im Bereich dieses Andockbereiches 17 können die Werkstückträger 50 von dem Transportband 14 an eine Fertigungseinheit 20 übergeben werden, von der in den Fig. 1 und 2 nur ein kleiner Teil dargestellt ist.

Auch zwischen den Trennstegen 16, welche die beiden Spuren 14a, 14b voneinander trennen, ist ein Bereich ohne einen Trennsteg frei gelassen. Dieser Bereich ohne Trennsteg ist gerade lang genug, um einen Werkstückträger 50 passieren zu lassen, und liegt unter der Weiche 80. Durch die Weiche 80 und den Bereich ohne Trennsteg wird ein Spurwechsel eines Werkstückträgers 50 von einer Spur 14b, 14a auf die andere 14a, 14b ermöglicht, wie weiter unten erläutert wird.

Die Trennstege 16 und die Begrenzungsstege 18, 18' können sowohl an einer in den Figuren nicht gezeigten Abdeckung des Transportbandes 14 als auch an einer Fertigungseinheit 20 befestigt sein. Da die Trennstege 16 nicht zwangsläufig in der Mitte des Transportbandes 14 sitzen müssen, und im Prinzip an beliebiger Stelle platziert werden können, ist die Einteilung des Transportbandes 14 in zwei oder mehr Spuren flexibel.

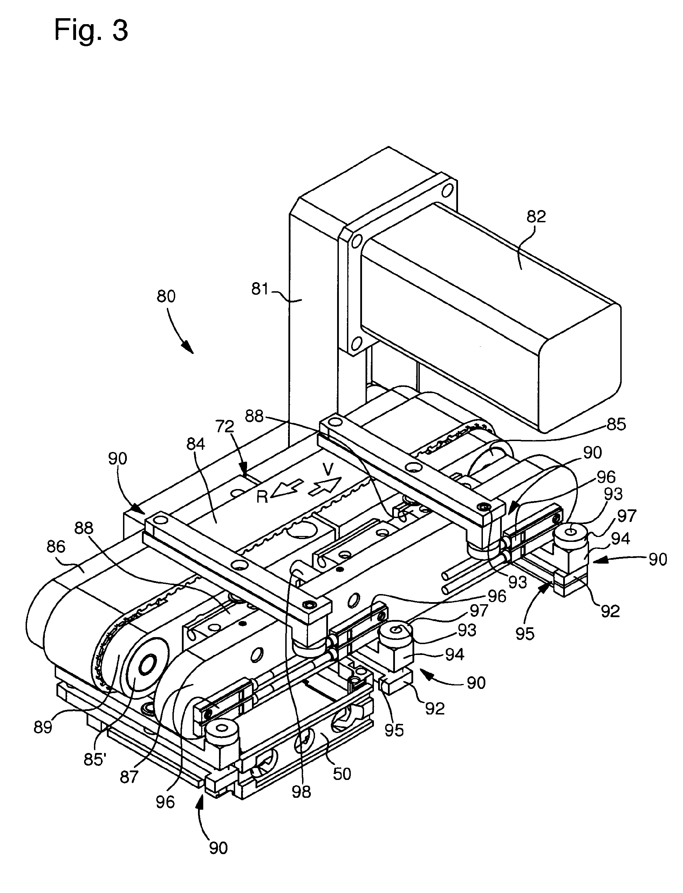

Die Weiche 80 ist in Fig. 3 vergrössert dargestellt. Sie umfasst einen vertikalen Träger 81, an dem ein Motor 82 befestigt ist. Dieser Motor 82 dient zum Antreiben einer Umlenkrolle 85, über die ein umlaufendes Band 84 geführt ist. Wenn die Weiche 80 an der Fertigungseinheit 20 befestigt ist, und die Fertigungseinheit 20 ihrerseits an dem Transportband 14 montiert ist, verläuft das Band 84 senkrecht zu dem Transportband 14 und erstreckt sich oberhalb von diesem über dessen gesamte Breite, das heisst von einem der seitlichen Begrenzungsstege 18 bis zu dem anderen 18'. Die angetriebene Umlenkrolle 85 und der Motor 82 liegen dabei oberhalb des der Fertigungseinheit 20 abgewandten Begrenzungssteges 18. Die angetriebene Umlenkrolle 85 sowie eine oberhalb des anderen, der Fertigungseinheit 20 zugewandten Begrenzungssteges 18 liegende zweite Umlenkrolle 85' sind beide jeweils an einer Seite an einem rückwärtigen Seitenteil 86 und an der anderen Seite an einem Mittelteil 89 drehbar gelagert. Zwischen dem rückwärtigen Seitenteil 86 und dem Mittelteil 89 erstreckt sich ein Hohlraum, der in den Figuren 1-3 aber von dem Band 84 verdeckt ist. An der anderen Seite des Mittelteils 89 ist ein weiterer Hohlraum vorgesehen, der über Abstandshalter 98 mit einem vorderen Seitenteil 87 verbunden ist. Sowohl die beiden Seitenteile 86, 87 als auch das Mittelteil 89 erstrecken sich jeweils von der angetriebenen Umlenkrolle 85 bis zu der zweiten Umlenkrolle 85'. Während das vordere Seitenteil 86 einstückig ausgebildet ist, sind das hintere Seitenteil 86 und das Mittelteil 89 jeweils aus zwei Hälften zusammengesetzt. Zwischen den beiden Hälften ist jeweils ein Spalt 72 vorgesehen, dessen Breite sich regeln lässt, um die Bandspannung des umlaufenden Bandes 84 einzustellen.

An dem umlaufenden Band 84 sind aussenseitig insgesamt fünf Leistenpaare 90 in gleichmässigen Abständen befestigt. Der Abstand zwischen zwei benachbarten Leistenpaaren 90 ist dabei so gewählt, dass ein Werkstückträger 50 gerade zwischen die beiden Leistenpaare 90 passt, ohne zu verklemmen. Wenn das Band 84 über die Umlenkrolle 85 von dem Motor 82 angetrieben wird, bewegen sich die Leistenpaare 90 auf einer Bahn entlang des Bandes 84 um eine sich parallel, zu der Transportrichtung T des Transportbandes oberhalb der Trennstege 16 erstreckende Achse. In den Fig. 1 und 3 bzw. 2 sind jeweils unterschiedliche Positionen dargestellt, bei denen jedoch immer drei Leistenpaare 90 an einer Unterseite der Weiche 80 und zwei Leistenpaare 90 an einer Oberseite der Weiche 80 liegen.

Jedes Leistenpaar 90 umfasst eine feststehende Leiste 94, die an dem Band 84 befestigt ist, und eine verstellbare Leiste, 92, die über an einer Seite aussen an dem Leistenpaar 90 vorgesehene Verbindungsstifte 93 mit der feststehenden Leiste 94 verbunden ist. Die Verbindungsstifte 93 begrenzen dabei gleichzeitig den Abstand zwischen den beiden Leisten 92, 94. Die Stifte 93 sind jeweils in einer Bohrung in der verstellbaren Leiste 92 fest eingepresst und erstrecken sich durch eine weitere Bohrung in der feststehenden Leiste hindurch. Im Bereich dieser Bohrung weist die feststehende Leiste 94 einen Bereich grösserer Dicke auf, so dass die Bohrung ausreichend lang ist, um eine Führung für den Stift 93 zu bilden. Durch diese Führung des Stifts 93 in der Bohrung wird die verstellbare Leiste 92 parallel zu der feststehenden Leiste und damit parallel zu dem Transportband 14 gehalten. Der Verbindungsstift 93 endet an seinem über die Bohrung in der feststehenden Leiste 94 hinaus ragenden Ende mit einem scheibenförmigen Kopf 97, dessen Durchmesser in etwa der Breite der Leisten 92, 94 entspricht, und damit den Durchmesser der Bohrung und des Verbindungsstiftes 93 deutlich überschreitet. Dieser scheibenförmige Kopf begrenzt den Abstand zwischen den beiden Leisten 92, 94.

Die beiden vorderen der in den Fig. 1 bis 3 unterhalb der Weiche 80 liegenden Leistenpaare 90 befinden sich jeweils in einer aktiven Position, in der die feststehende Leiste 92 und die bewegliche Leiste 94 voneinander beabstandet sind. In dieser Position liegt der Kopf 97 des Verbindungsstiftes 93 oben auf der feststehenden Leiste 92 auf und begrenzt dadurch den Abstand zwischen den beiden Leisten 92, 94.

An der Aussenseite des vorderen Seitenteils 87 sind insgesamt sechs Sensoren 96 jeweils paarweise übereinander angeordnet. In der in Figur 3 dargestellen Position des Bandes 84 und der Ausschleusselemente 90 liegt jeweils ein Paar von Sensoren 96 auf der Höhe eines an der Unterseite der Weiche 80 liegenden Ausschleusselementes 90. Genauer liegen die Köpfe 97 der Verbindugnsstifte 93 jeweils vor einem Paar von Sensoren 96, wobei ein unterer Sensor 96 sich auf der gleichen Höhe befindet wie der Kopf 97 des Verbindungsstiftes 93, wenn die bewegliche Leiste 92 von der feststehenden Leiste 94 maximal beabstandet ist. Der obere Sensor 96 befindet sich dann auf der Höhe des Kopfs 97 des Verbindungsstiftes 93, wenn die verstellbare Leiste 92 an der feststehenden Leiste 94 anliegt, und das Ausschleusselement 90 sich somit in seiner neutralen Stellung befindet. Für ein Leistenpaar 90 kann somit immer dann, wenn es eines der Sensorpaare 96 passiert, festgestellt werden, ob die beiden Leisten 92, 94 voneinander beabstandet sind oder aneinander anliegen, dass heisst also ob das Ausschleusselement in seiner aktiven oder in seiner neutralen Stellung ist. Die Sensoren 96 sind mit einer in den Figuren nicht dargestellten Steuerung verbunden und nach Erteilung eines Befehls zum Verstellen einer der verstellbaren Leisten 92 kann mit Hilfe der Sensoren 96 überprüft werden, ob die gewünschte Stellung tatsächlich herbeigeführt worden ist. Falls dem nicht so sein sollte, kann beispielsweise eine Fehlermeldung ausgegeben werden.

Die Ansteuerung der verstellbaren Leisten 92 erfolgt über zwischen dem Mittelteil 89 und dem vorderen Seitenteil 87 angeordnete Pneumatikzylinder 88.

Wie man in Figur 3 erkennt, schliessen die verstellbaren Leisten 92 an ihrem in Figur 3 dem Betrachter zugewandten Ende L förmig mit einem Mitnehmer 95 ab. Dieser Mitnehmer 95 dient dazu, zu verhindern, dass ein Werkstückträger 50 bei einem verspäteten Verstellen des Ausschleusselementes 90 trotz dieser Verspätung von dem Mitnehmer 95 in Richtung der Bewegungsrichtung des Leistenpaares 90 mitgenommen wird.

Die bereits erwähnte, in den Fig. 1 und 2 nur teilweise sichtbare Fertigungseinheit 20 ist auf einem Grundgestell befestigt, auf dem auch das Transportband 14 verläuft. Ein in den Figuren nicht dargestellter Teil der Fertigungseinheit 20 liegt unterhalb des Transportbandes 14, insbesondere auch unter den mit dem Bezugszeichen 44 bezeichneten Bereichen, wie später näher erläutert werden wird. Sowohl die Fertigungseinheit 20 als auch eine modulare Fertigungslinie, in der die erfindungsgemässe Weiche zum Einsatz kommen kann, sind im Übrigen in der Patentanmeldung xxx der gleichen Anmelderin beschrieben.

Die Fertigungseinheit 20 weist zwei parallel verlaufende, endlos umlaufende Förderbänder 24, 26 auf, die in einander entgegen gesetzte Förderrichtungen F₁, F₂ angetrieben sind. Wenn die Fertigungseinheit 20 auf im Grundgestell 10 befestigt ist, verlaufen die beiden Förderbänder 24, 26 senkrecht zu dem Transportband 14. Das in den Fig. 1 und 2 links liegende Förderband 24 dient dem Befördern eines Werkstückträgers 50 von dem Transportband 14 zu einem nicht dargestellten Funktionselement 22 der Fertigungseinheit 20. Das in den Fig. 1 und 2 rechts liegende Förderband 26 befördert die Werkstückträger 50 wieder zurück zu dem Transportband 14.

In die Fertigungseinheit 20 sind zudem zwei in den Figuren nicht dargestellte RFID - Leseköpfe und eine in den Figuren ebenfalls nicht dargstellte Schreibeinheit zum Beschreiben eines in einen RFID - Transponder integrierten Speichers integriert.

Jeder der Werkstückträger 50 ist mit einem RFID - Transponder versehen, der einen beschreibbaren Speicher besitzt. In diesem Speicher wird zu Beginn die Reihenfolge der durchzuführenden Schritte, das heisst die Reihenfolge der anzusteuernden Fertigungseinheiten 20 und/oder Handarbeitsplätze abgespeichert. Beispielsweise kann jeder Fertigungseinheit 20 eine Kennnummer zugeordnet werden, wobei diese Kennnummern dann in der gewünschten Reihenfolge gespeichert werden.

Die Leseköpfe sind derart an der Fertigungseinheit 20 angebracht, dass sie bei montierter Fertigungseinheit 20 unterhalb der in Fig. 1 und 2 mit der Bezugsziffer 44 bezeichneten Bereichen des Transportbandes 14 zu liegen kommen. Ein an einem Werkstückträger 50 befestigter RFID - Transponder kann somit ausgelesen werden, wenn der Werkstückträger 50 auf einer der beiden Spuren 14a, 14b des Transportbandes 14 den darunter liegenden Lesekopf passiert. Dabei liegen die Leseköpfe in Bezug auf die Transportrichtung T des Transportbandes 14 noch vor der Weiche 80, sodass letztere in Abhängigkeit von den mittels der Leseköpfe ausgelesenen Daten betätigt werden kann. Die Schreibeinheit hingegen, die in den Figuren nicht dargestellt ist, liegt unter dem zweiten Förderband 26 und dient dazu, den von dem Funktionselement durchgeführten Bearbeitungsschritt als erledigt zu markieren oder zu löschen. Sie kann im Übrigen auch unter dem ersten Förderband 24 liegen, so dass bereits vor der eigentlichen Bearbeitung der entsprechende Bearbeitungsschritt als erledigt markiert wird.

Wenn ein Werkstückträger 50 von dem Transportband 14 über einen der beiden Leseköpfe transportiert wird, gibt der Lesekopf die gespeicherten Informationen an die Steuereinheit der Fertigungseinheit 20 weiter. In der Steuereinheit der Fertigungseinheit 20 ist die der jeweiligen Fertigungseinheit 20 zugeordnete Kennnummer gespeichert. Die Steuereinheit kann also nach Erhalt der Daten von dem Lesekopf prüfen, ob der in dem Speicher des RFID-Transponders gespeicherte nächste durchzuführende Bearbeitungsschritt derjenige ist, der von der vorliegenden Fertigungseinheit 20 durchgeführt wird, beispielsweise durch einen einfachen Vergleich der Kennnummern. Im Fall einer Übereinstimmung wird die Steuerung den Befehl erteilen, den betreffenden Werkstückträger 50 auf das Förderband 24 der Fertigungseinheit 20 zu verschieben. Hierzu wird zunächst, falls der Werkstückträger 50 sich auf der dem Förderband 24 abgewandten Spur 14a befindet, ein erstes Ausschleuselement 90 ins seinen aktiven Zustand verstellt, und dann das umlaufende Band 84 mit den Ausschleuselementen 90 angetrieben. Der Werkstückträger 50 wird dadurch von dem Ausschleuselement 90 auf die "Abbiegespur" 14b geschoben. Im Anschluss wird das gleiche Ausschleuselement 90 in seiner aktiven Position belassen und das Band 84 weiter angetrieben, sodass der Werkstückträger 50 auf das Förderband 24 geschoben wird. Von dem Förderband 24 wird der Werkstückträger 50 anschliessend zu dem nicht dargestellten Funktionselement befördert, von dem der entsprechende Bearbeitungsschritt ausgeführt wird.

Das zweite Förderband 26 befördert den Werkstückträger 50 nach Abschluss des Bearbeitungsschrittes wieder in Richtung des Transportbandes 14. Um den Werkstücksträger 50 dann von diesem zweiten Förderband 26 auf die in "Überholspur" 14b des Transportbandes 14 zu befördern, kann ein in den Figuren nicht dargestellter Schieber oder eine in den Figuren ebenfalls nicht dargestellte Weiche verwendet werden. Vor der Übergabe an das Transportband 14 markiert eine unterhalb des zweiten Förderbandes 26 angeordnete Schreibeinheit in dem beschreibbaren Speicher des Werkstückträgers den durchgeführten Bearbeitungsschritt als erledigt.

Die bereits erwähnte Steuerung für die Weiche 80 kann im Übrigen sowohl in die Weiche 80 selbst als auch an anderer Stelle in die Fertigungseinheit 20 integriert sein. Eine zentrale Steuerung der gesamten Fertigungslinie ist in keinem Fall erforderlich.

### Bezugszeichenliste

- 14: Transportband
- 14a, 14b: Spur auf Transportband
- 15, 15': Umlenkpunkt
- 16: Trennsteg
- 17: Andockbereich
- 18, 18': Begrenzungssteg
- 19: Brücke
- 20: Fertigungseinheit
- 24, 26: Förderband
- 44: Ort, unter dem Lesekopf angeordnet ist
- 50, 50': Werkstückträger
- 72: Spalt
- 80: Weiche
- 81: Träger für Motor
- 82: Motor
- 84: umlaufendes Band
- 85, 85': Umlenkrolle
- 86: rückwärtiges Seitenteil
- 87: vorderes Seitenteil
- 88: Pneumatikzylinder
- 89: Mittelteil
- 90: Ausschleuselement
- 92: verstellbare Leiste
- 93: Verbindungsstift
- 94: feste Leiste
- 95: Mitnehmer
- 96: Sensor
- 97: Kopf des Verbindungsstiftes
- 98: Abstandshalter
- F₁: Förderrichtung
- F₂: Förderrichtung
- T: Transportrichtung
- R, V: Bewegungsrichtung des Bandes

## Patentansprüche

1. Weiche 80, die dazu bestimmt ist, oberhalb eines Förderers angebracht zu werden, auf welchem Werkstückträger in eine Förderrichtung T transportiert werden, und die wenigstens ein Ausschleuselement 90 umfasst, welches entlang einer geschlossenen Bahn beweglich ist, wobei diese geschlossene Bahn symmetrisch um eine Achse verläuft, die sich parallel zu der Förderrichtung T erstreckt, und das Ausschleuselement 90 zwischen einer neutralen Position und einer in Bezug auf die Achse der Bahn aussenseitig von der neutralen Position liegenden aktiven Position verstellbar ist,
**dadurch gekennzeichnet, dass** das Ausschleuselement 90 als horizontales, sich parallel zu der Achse der Bahn erstreckendes Leistenpaar ausgebildet ist, wobei die beiden Leisten 92, 94 des Paares in der neutralen Position aneinander anliegen und in der aktiven Position voneinander beabstandet sind.

2. Weiche 80 nach Anspruch 1,
**dadurch gekennzeichnet, dass** mehrere Ausschleuselemente 90 vorgesehen sind, die jeweils unabhängig voneinander verstellbar sind.

3. Weiche 80 nach Anspruch 2,
**dadurch gekennzeichnet, dass** die Ausschleuselemente 90 derart miteinander gekoppelt sind, dass sie nur gemeinsam entlang der Bahn beweglich sind.

4. Weiche 80 nach einem der vorstehenden Ansprüche,
**dadurch gekennzeichnet, dass** die Bahn zumindest einen Abschnitt aufweist, der horizontal verläuft.

5. Weiche 80 nach einem der vorstehenden Ansprüche,
**dadurch gekennzeichnet, dass** das Ausschleuselement 90 entlang der Bahn in zwei einander entgegen gesetzte Richtungen R, V beweglich ist.

6. Weiche 80 nach einem der vorstehenden Ansprüche,
**dadurch gekennzeichnet, dass** das Ausschleuselement 90 an einem entlang der geschlossenen Bahn umlaufenden, mit einem Antrieb 82 verbundenen Band 84 befestigt ist, wobei ein Antreiben des Bandes 84 eine Bewegung des Ausschleuselementes 90 entlang der Bahn bewirkt.

7. Weiche 80 nach Anspruch 6,
**dadurch gekennzeichnet, dass** mehrere Ausschleuselemente 90 mit gleichmässigen Abständen voneinander an dem Band 84 befestigt sind.

8. Weiche 80 nach Anspruch 6 oder 7,
**dadurch gekennzeichnet, dass** sie einen Antrieb 82 zum Antreiben des Bandes 84 aufweist, insbesondere einen sowohl vorwärts als auch rückwärts antreibbaren Antrieb.

9. Weiche 80 nach einem der vorstehenden Ansprüche,
**dadurch gekennzeichnet, dass** sie eine mit einer Steuerung gekoppelte Betätigungseinheit 88 zum Verstellen der Ausschleuselemente 90 von der neutralen Position in die aktive Position umfasst.

10. Weiche 80 nach einem der vorstehenden Ansprüche,
**dadurch gekennzeichnet, dass** die Betätigungseinheit 88 einen Magneten oder ein pneumatisches Element umfasst.

11. Weiche 80 nach einem der vorstehenden Ansprüche,
**dadurch gekennzeichnet, dass** sie einen mit einer Steuerung gekoppelten Sensor 96 aufweist, welcher feststellt, ob das Ausschleuselement 90 sich in der neutralen oder in der aktiven Position befindet.

## Claims

1. Diverter 80, which is designed to be mounted above a conveyor, on which workpiece carriers are transported along a transport direction T, and which comprises at least a discharge element 90, movable along closed web, wherein this closed web symmetrically runs around an axis which extends among a transport direction T, and wherein the discharge element 90 is movable between a neutral position and an active position lying outwards with respect to the web's axis compared to the neutral position,
**characterized in that** the discharge element 90 is arranged as a pair of horizontal bars extending alone the web's axis, wherein each of the bars 92, 94 of the pair lie together in the neutral position, and apart from each other in the active position.

2. Diverter 80 according to claim 1,
**characterized in that** a plurality of discharge elements 90 are foreseen, each of which being movable independently from each other.

3. Diverted 80 according to claim 2,
**characterized in that** the discharge elements 90 are coupled one to another in such a way that they can only move together along the web's trajectory.

4. Diverter 80 according to any of the previous claims,
**characterized in that** the web's trajectory comprises at least one section running horizontally.

5. Diverter 80 according to any of the previous claims,
**characterized in that** the discharge element 90 is movable along the web's trajectory in two opposite directions R,V.

6. Diverter 80 according to any of the previous claims,
**characterized in that** the discharge element 90 is attached to a band 84 wounded around the closed web, and that is connected to drive means 82, wherein the drive of the band 84 causes a movement of discharge element 90 along the band.

7. Diverter 80 according to claim 6,
**characterized in that** a plurality of discharge elements 90 are attached to the band 84 at an equal distance from one to another.

8. Diverter 80 according to claim 6,
**characterized in that** comprises drive means 82 to drive the band 84, especially drive means which can move the band forward and backwards.

9. Diverter 80 according to any of the previous claims,
**characterized in that** it comprises an actuating unit 88, coupled with control means for displacing the discharge elements 90 from their neutral position to their active position.

10. Diverter 80 according to any of the previous claims,
**characterized in that** the actuating unit 88 comprise a magnet or a pneumatic element.

11. Diverter 80 according to any of the previous claims,
**characterized in that** it comprises a sensor 96 coupled to control means, which detects whether the discharge element 90 is in the neutral or in the active position.

## Revendications

1. Aiguillage 80, qui est destiné à être monté au-dessus d'un transporteur, sur lequel sont transportés des porte-pièces selon une direction T, et qui comprend au moins un élément d'extraction 90, ce dernier étant mobile le long d'une trajectoire fermée, cette trajectoire fermée défilant symétriquement le long d'un axe qui s'étend parallèlement à la direction de transport T, et l'élément d'extraction 90 pouvant être déplacé entre une position neutre et une position active décalée vers l'extérieur par rapport à la position neutre selon l'axe de la trajectoire,
**caractérisé en ce que** l'élément d'extraction 90 est agencé comme un paire de baguettes horizontales s'étendant parallèlement à l'axe de la bande, chacune des baguettes 92, 94 de la paire étant accolées l'une à l'autre en position neutre et éloignées l'une de l'autre en position active.

2. Aiguillage 80 selon la revendication 1,
**caractérisé en ce que** plusieurs éléments d'extraction 90 sont prévus, chacun étant déplaçable indépendamment des autres.

3. Aiguillage 80 selon la revendication 2,
**caractérisé en ce que** les éléments d'extraction 90 sont couplés les uns aux autres de telle sorte qu'ils puissent seulement se déplacer ensemble le long de la trajectoire.

4. Aiguillage 80 selon l'une des revendications précédentes,
**caractérisé en ce que** la bonde comprend au moins une section qui défile horizontalement.

5. Aiguillage 80 selon l'une des revendications précédentes,
**caractérisé en ce que** l'élément d'extraction 90 est mobile le long de la trajectoire dans deux directions opposées R,V.

6. Aiguillage 80 selon l'une des revendications précédentes,
**caractérisé en ce que** l'élément d'extraction 90 est attaché à une bande 84 enroulée autour de la trajectoire fermée et reliée à des moyens d'entraînement 82, l'entraînement de la bande 84 provoquant un mouvement de l'élément d'extraction le long de la trajectoire.

7. Aiguillage 80 selon la revendication 6,
**caractérisé en ce que** plusieurs éléments d'extraction 90 sont attachés à la bande 84 à la même distance les uns des autres.

8. Aiguillage 80 selon la revendication 7,
**caractérisé en ce qu'**il comprend des moyens d'entraînement 82 pour entraîner la bande 84, en particulier des moyens d'entraînement pouvant actionneur la bande en avant et en carrière.

9. Aiguillage 80 selon l'une des revendications précédentes,
**caractérisé en ce qu'**il comprend une unité d'actionnement 88 couplée à des moyens de commande pour le déplacement des éléments d'extraction 90 depuis leur position neutre à leur position active.

10. Aiguillage 80 selon l'une des revendications précédentes,
**caractérisé en ce que** l'unité d'actionnement 88 comprend un aimant ou un élément pneumatique.

11. Aiguillage 80 selon l'une des revendications précédentes,
**caractérisé en ce qu'**il comprend un capteur 96 couplé à des moyens de commande, lequel constate si l'élément d'extraction 90 se trouve dans la position neutre ou active.
